# EUROPÄISCHE PATENTSCHRIFT

(11) **EP 2 404 099 B1**
(45) Veröffentlichungstag und Bekanntmachung des Hinweises auf die Patenterteilung: **21.02.2018**
(21) Anmeldenummer: 09803734.4
(22) Anmeldetag: 24.12.2009
(51) Int. Cl.: F16N 11/10, F16N 29/02

(54) **SCHMIERSTOFFSPENDER**
LUBRICANT DISPENSER
DISTRIBUTEUR DE LUBRIFIANT

(30) Priorität: 05.03.2009 DE 102009011374; 26.05.2009 DE 102009022707
(43) Veröffentlichungstag der Anmeldung: 11.01.2012
(73) Patentinhaber: Perma-Tec GmbH & Co. KG, 97717 Euerdorf (DE)
(72) Erfinder: ROHNER, Eduard, 97762 Hammelburg (DE); MORPER, Rainer, 97729 Ramsthal (DE)
(74) Vertreter: Lorenz, Bernd Ingo Thaddeus
(86) Internationale Anmeldenummer: PCT/EP2009/009278
(87) Internationale Veröffentlichungsnummer: WO 2010/099812

(56) Entgegenhaltungen:
- EP-B1- 0 806 603
- DE-A1-102005 035 452
- DE-A1-102005 048 288
- US-A1- 2008 060 879

## Beschreibung

Die Erfindung betrifft einen Schmierstoffspender mit
einer Schmierstoffkartusche, die einen Schmierstoffvorratsraum mit einem Schmierstoffauslass, einen Kolben sowie eine Gaserzeugereinheit zur elektrochemischen Erzeugung eines Gases aufweist,
einer elektronischen Steuerungseinheit zur Steuerung der elektrochemischen Gaserzeugung und
einer Treiberbatterie für die Stromversorgung zumindest der elektronischen Steuerungseinheit.
Die elektronische Steuerungseinheit ist als separate und wiederverwendbare Einheit lösbar mit der Schmierstoffkartusche verbunden und weist elektrische Kontaktelemente auf, die mit elektrischen Anschlüssen der Gaserzeugereinheit in Verbindung stehen.

Ein vergleichbarer Schmierstoffspender ist aus DE 10 2005 035 452 A1, US2008/0060879 A1 und aus DE 10 2005 004 456 A1 bekannt. Die Gaserzeugereinheit, die elektronische Steuerungseinheit sowie eine Batterie für die Stromversorgung sind in der Schmierstoffkartusche integriert und in einem geschlossenen Gehäuse untergebracht. Die Schmierstoffkartusche ist ein Wegwerfartikel und wird nach Entleerung des Schmierstoffvorratsraumes einschließlich der elektronischen Komponenten als Ganzes entsorgt. Sowohl unter Umweltgesichtspunkten als auch unter Kostengesichtspunkten ist eine solche Praxis unbefriedigend. Nachteilig ist ferner, dass die Batterie nach einer längeren Lagerung des Schmierstoffspenders schon vor der Inbetriebnahme des Schmierstoffspenders teilweise entladen sein kann, da die elektronische Steuerungseinrichtung bereits im passiven Zustand von der Batterie mit Strom versorgt wird. Bisweilen kann nicht sichergestellt werden, dass der Schmierstoffspender aufgrund einer durch die Lagerung bedingten Teilentladung noch über einen langen Spendezeitraum ordnungsgemäß arbeitet.

Die elektronische Steuerung von Schmierstoffspendern, die einen elektrochemischen Gasantrieb aufweisen, wird zunehmend komplexer. Aus EP 0 806 603 B1 ist eine elektronische Steuerungseinheit für Schmierstoffspender mit einem elektrochemischen Gasantrieb bekannt, die einen Mikrocomputer, eine LCD-Anzeige sowie einen Wahlschalter zur Einstellung des Spendezeitraumes aufweist. Aus Umwelt- und Kostengesichtspunkten ist es sinnvoll, dass eine solche Steuerungseinheit mehrfach genutzt werden kann. Dabei ist dafür Sorge zu tragen, dass die Handhabung eines Schmierstoffspenders mit austauschbarer elektronischer Steuerung einfach ist und bei Verwendung einer neuen Schmierstoffkartusche die Stromversorgung über einen langen Spendezeitraum, der viele Monate betragen kann, gewährleistet ist.

Aus DE 10 2005 048 288 A1 ist ein Schmierstoffspender nach dem Oberbegriff des Anspruches 1 bekannt. Die Steuerungseinheit weist eine Leiterplatte mit verschiedenen Widerstandsbahnen auf, die in Kontakt mit einem Zellenpaket, bestehend aus einer Gasentwicklungszelle sowie einer Batterie, steht. Das Zellenpaket ist von außen zugänglich und kann ausgetauscht werden. Ferner ist die Steuerungseinheit lösbar mit der Schmierstoffkartusche verbunden und kann wiederverwendet werden. Nach einer Entleerung der Schmierstoffkartusche kann diese durch eine volle Kartusche ersetzt werden. Dabei muss auch das in die Steuerungseinheit eingeschraubte Zellenpaket durch ein neues Zellenpaket ersetzt werden, welches eine unverbrauchte Gasentwicklungszelle sowie eine voll aufgeladene Batterie enthält. Sofern durch einen Bedienungsfehler das Zellenpaket nicht gewechselt wird, besteht die Gefahr, dass die Gaserzeugungskapazität nicht ausreicht, um die Schmierstoffkartusche vollständig zu entleeren.

Vor diesem Hintergrund liegt der Erfindung die Aufgabe zugrunde, einen Schmierstoffspender mit den eingangs beschriebenen Merkmalen anzugeben, dessen Handhabung möglichst einfach ist und bei dem sichergestellt ist, dass bei der Verwendung einer neuen Schmierstoffkartusche gleichzeitig sowohl das gaserzeugende Element als auch die Treiberbatterie ausgetauscht wird.

Gegenstand der Erfindung und Lösung dieser Aufgabe ist eine Schmierstoffkartusche nach Anspruch 1.

Die Treiberbatterie und die Gaserzeugungseinheit sind erfindungsgemäß in der Schmierstoffkartusche integriert, wobei die Treiberbatterie unzugänglich an einem Träger der Gaserzeugereinheit gehalten ist. Die elektronische Steuerungseinheit weist keine eigene Stromquelle auf. Erst durch Anbringen der elektronischen Steuerungseinheit an der Schmierstoffkartusche ist ein der Gaserzeugereinheit zugeordneter Stromkreis geschlossen und die elektronische Steuerungseinheit funktionsbereit. Bei Verwendung einer neuen Schmierstoffkartusche kommt daher zwangsläufig auch eine neue Treiberbatterie für die Stromversorgung, insbesondere auch für die Stromversorgung der elektronischen Steuerungseinheit, zum Einsatz. Dadurch, dass die von der Treiberbatterie gespeisten Stromkreise erst geschlossen werden, wenn die elektronische Steuerungseinheit auf die Schmierstoffkartusche montiert wird, ist eine unerwünschte Vorentladung der Treiberbatterie auch nach einer langen Lagerung der Schmierstoffkartusche nicht möglich. Für den Betrieb eines Schmierstoffspenders, der vielfach in Außenanlagen bei extremen Temperaturen eingesetzt wird und über lange Zeiträume von mehreren Monaten arbeitet, muss eine hochwertige Batterie verwendet werden. Die Erfahrung lehrt, dass solche hochwertigen Batterien bisweilen aus Schmierstoffspendern herausgenommen und gestohlen werden. Dadurch, dass die Treiberbatterie erfindungsgemäß unzugänglich in der Schmierstoffkartusche integriert ist und ohne Zerstörung der Schmierstoffkartusche nicht entfernt werden kann, ist die Gefahr eines Diebstahls deutlich gemindert. Durch die räumliche Trennung der Treiberbatterie und der elektronischen Steuerung ist ferner auch die Gefahr, dass die elektronische Steuerungseinheit bestimmungswidrig abgebaut und anderweitig verwendet wird, reduziert.

Als elektrochemische Gaserzeugereinheit können ohne prinzipielle Einschränkungen unterschiedliche Systeme im Rahmen der erfindungsgemäßen Lehre verwendet werden. Es können insbesondere elektrochemische Gaserzeugereinheiten eingesetzt werden, die eine Stromquelle für die Gaserzeugung benötigen. Es versteht sich, dass die Treiberbatterie oder ggf. eine zusätzliche Batterie, die ebenfalls von außen unzugänglich an dem Träger der Gaserzeugereinheit gehalten wird, die Energie für die elektrochemische Reaktion liefert. Als Gaserzeugereinheit können ferner Systeme eingesetzt werden, deren Gaserzeugung spontan mit dem Schließen eines Stromkreises beginnt. Hierzu gehören insbesondere Zink-Luft-Zellen, welche Außenabmessungen einer handelsüblichen Knopfbatterie haben und eine Anode aus Zn-Pt, eine Kathode aus Ni oder C sowie eine Elektrolytlösung (KOH, H₂SO₄) aufweisen.

Erfindungsgemäß weist der Träger der Gaserzeugereinheit ein Aufnahmefach für eine Gasentwicklungszelle auf, wobei das Aufnahmefach durch einen Deckel gasdicht verschlossen ist und durch eine Gasauslassöffnung mit einem kolbenrückseitigen Gasraum innerhalb der Schmierstoffkartusche verbunden ist. Die Gasentwicklungszelle besteht vorzugsweise aus einer Zink-Luft-Zelle oder einer Einheit aus mehreren hintereinander angeordneten Zink-Luft-Zellen, die in einem geschlossenen Stromkreis Wasserstoff abgeben und keine Fremdenergien benötigen. Der Deckel des Aufnahmefaches und eine dem Deckel gegenüberliegende Stirnfläche des Aufnahmefaches bilden elektrische Kontaktelemente.

Der Träger der Gaserzeugereinheit kann als Kunststoffspritzteil ausgebildet werden, welches einen Grundkörper aus einem elektrisch nicht leitenden Kunststoff und einen Abschnitt aus einem elektrisch leitfähigen Material aufweist, wobei der elektrisch leitende Abschnitt eine Kontaktfläche für die Treiberbatterie sowie ein damit elektrisch verbundenes Kontaktelement für die Gasentwicklungszelle bildet. Hierbei haben die Gasentwicklungszelle und die Treiberbatterie einen gemeinsamen Massekontakt. Die Fixierung der Treiberbatterie erfolgt mittels einer an der Außenseite des Trägers angeordneten Klemmeinrichtung. Ferner sind in dem Träger der Gaserzeugereinheit elektrisch leitende Kontaktfedern eingesetzt, die an der Treiberbatterie anliegen oder mittelbar mit dieser elektrisch verbunden sind und mit elektrischen Kontaktelementen der elektronischen Steuerungseinheit zusammenwirken.

Der Deckel des Aufnahmefaches für die Gaszelle ist vorzugsweise als Kunststoffspritzteil ausgebildet, welches einen elektrisch leitfähigen Kern und einen den Kern umschließenden Mantel aus einem nicht leitenden Kunststoff aufweist. Der Mantel ist mit dem Träger der Gaserzeugereinheit verschweißt und bildet auf diese Weise einen gasdichten Abschluss des Aufnahmefaches. An dem elektrisch leitfähigen Kern des Deckels sind beidseitig elektrisch leitende Federkontakte angeordnet, die ebenfalls aus einem leitfähigen Kunststoff gefertigt und an den Kern des Deckels einstückig angeformt sein können. Der Deckel für das Aufnahmefach lässt sich in der beschriebenen Weise kostengünstig als zweikomponentiges Kunststoffspritzteil fertigen. Nach Entleerung des Schmierstoffvorratsraumes kann der Träger mit der Gaserzeugereinheit und der Treiberbatterie aus der Schmierstoffkartusche herausgebrochen werden und können die Elemente sachgerecht gezielt entsorgt werden. Der Gasauslasskanal der Gaserzeugereinheit ist daher durch eine trennbare Verbindung mit einer zugeordneten Öffnung im Behälterboden verbunden. Ferner kann die Schmierstoffkartusche eine Druckablasseinrichtung in Form eines Ventils oder einer Sollbruchstelle aufweisen.

Die elektronische Steuerungseinheit weist eine Platine auf, die mit elektronischen Komponenten, einem Taster für die Einstellung einer Spendezeit und einer LCD-Anzeige bestückt ist. Rückseitig sind der Platine elektrische Kontaktelemente zugeordnet, die nach der Montage der elektronischen Steuerungseinheit mit elektrischen Anschlüssen der Gaserzeugereinheit in Verbindung stehen. Gemäß einer bevorzugten Ausführung der Erfindung bestehen die elektrischen Kontaktelemente aus konzentrisch angeordneten kreisförmigen Leiterbahnen, denen jeweils ein elektrischer Anschluss der Gaserzeugereinheit zugeordnet ist. Die Platine ist zweckmäßig in einem Gehäusedeckel angeordnet, der ein Fenster für die LCD-Anzeige und eine Öffnung zur Betätigung des Tasters aufweist und durch eine Schraub- oder Bajonettverbindung an der Schmierstoffkartusche befestigbar ist. Zum Schutz der LCD-Anzeige sowie der elektronischen Komponenten gegen Feuchtigkeit ist zwischen dem Gehäusedeckel und der Schmierstoffkartusche eine Dichtung angeordnet und sind das Fenster und die Öffnung für den Taster durch eine Folie abgedichtet, die bei der Herstellung des aus Kunststoff bestehenden Gehäusedeckels in die Werkstückform eingelegt und bei der Herstellung des Kunststoffdeckels stoffschlüssig angeformt werden kann. Es versteht sich, dass die Schutzfolie auch nach anderen Verfahren, z. B. durch Anschweißen oder Ankleben, mit dem Gehäusedeckel verbunden werden kann.

Im Folgenden wird die Erfindung anhand eines Ausführungsbeispiels erläutert. Es zeigen schematisch
- Fig. 1: eine Explosionsdarstellung eines erfindungsgemäßen Schmierstoffspenders,
- Fig. 2: einen Längsschnitt durch den Schmierstoffspender,
- Fig. 3: eine perspektivische Darstellung der Gaserzeugereinheit des Schmierstoffspenders,
- Fig. 4: eine Einzelteilzeichnung eines Deckels, der ein Aufnahmefach für eine Gasentwicklungszelle innerhalb der Gaserzeugereinheit verschließt,
- Fig. 5: die elektronische Steuerungseinheit des Schmierstoffspenders in einer Explosionsdarstellung.

Zum grundsätzlichen Aufbau des in den Figuren dargestellten Schmierstoffspenders gehören eine Schmierstoffkartusche 1, die einen Schmierstoffvorratsraum 2 mit einem Schmierstoffauslass 3, einen Kolben 4 sowie eine Gaserzeugereinheit 5 zur elektrochemischen Erzeugung eines Gases aufweist, eine elektronische Steuerungseinheit 6 zur Steuerung der elektrochemischen Gaserzeugung und eine Treiberbatterie 7 für die Stromversorgung der elektronischen Steuerungseinheit 6. Die elektronische Steuerungseinheit 6 ist als separate und wiederverwendbare Einheit lösbar mit der Schmierstoffkartusche 1 verbunden und weist elektrische Kontaktelemente auf, die mit elektrischen Anschlüssen der Gaserzeugereinheit 5 in Verbindung stehen. Die Treiberbatterie 7 ist unzugänglich an einem Träger 8 der Gaserzeugereinheit 5 gehalten. Die elektronische Steuerungseinheit 6 weist keine eigene Stromquelle auf, so dass erst durch Anbringen der elektronischen Steuerungseinheit 6 an der Schmierstoffkartusche 1 ein der Gaserzeugereinheit 5 zugeordneter Stromkreis geschlossen und die elektronische Steuerungseinheit 6 funktionsbereit ist.

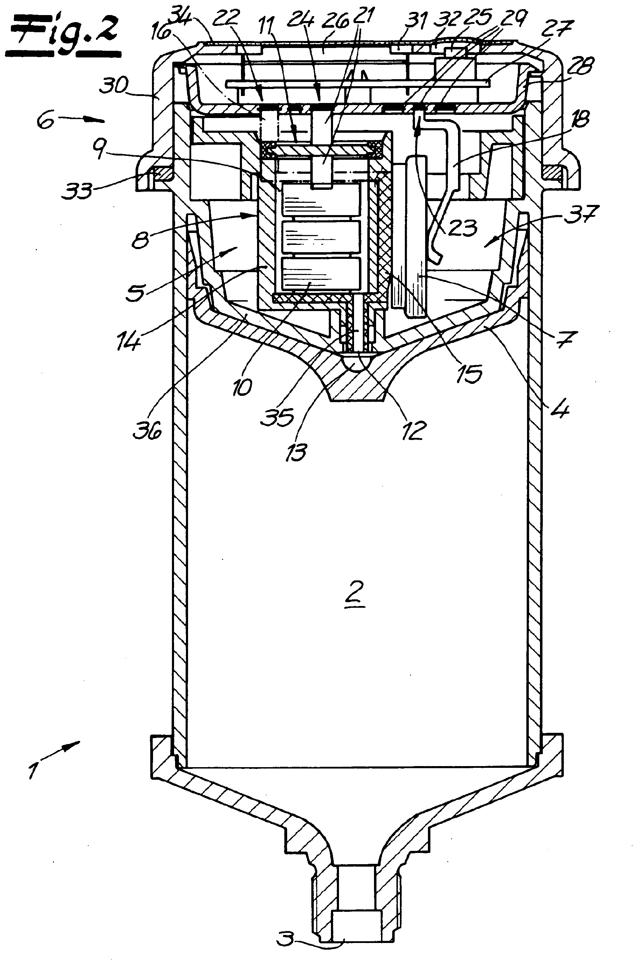

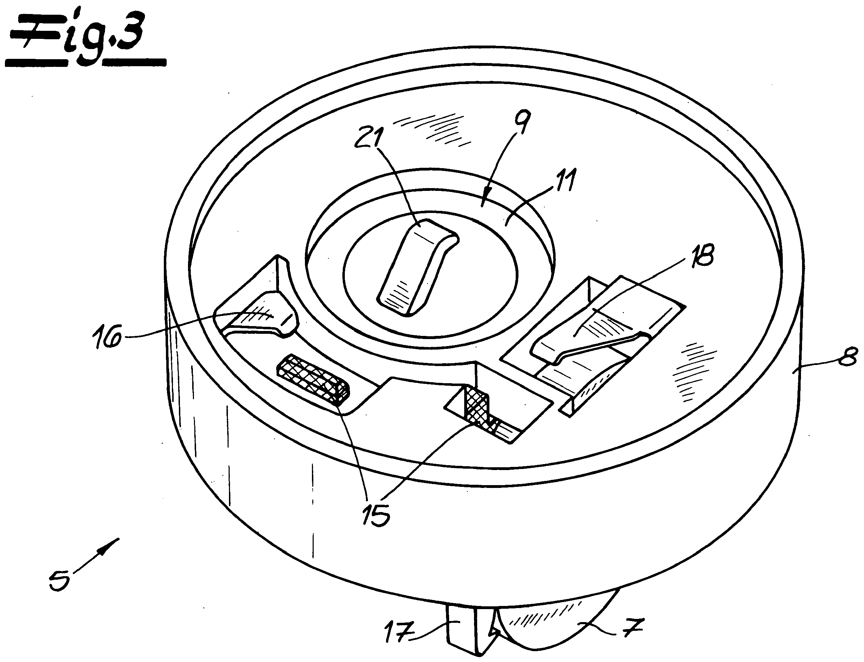

Der Schnittdarstellung in Fig. 2 entnimmt man, dass der Träger 8 der Gaserzeugereinheit 5 ein Aufnahmefach 9 für eine Gasentwicklungszelle 10 aufweist, wobei das Aufnahmefach 9 durch einen Deckel 11 gasdicht verschlossen ist und durch eine Gasauslassöffnung 12 mit einem kolbenrückseitigen Gasraum 13 innerhalb der Schmierstoffkartusche 1 verbunden ist. Im Ausführungsbeispiel besteht die Gasentwicklungszelle 10 aus einer Einheit aus mehreren knopfförmigen Zink-Luft-Zellen, die in einem geschlossenen Stromkreis Wasserstoff abgeben. Der Deckel 11 des Aufnahmefaches 9 und eine dem Deckel 11 gegenüberliegende Stirnfläche des Aufnahmefaches 9 bilden elektrische Kontaktelemente. Der Träger 8 der Gaserzeugereinheit 5 ist als Kunststoffspritzteil ausgebildet, welches einen Grundkörper 14 aus einem elektrisch nicht leitenden Kunststoff und einen Abschnitt 15 aus einem elektrisch leitfähigen Material aufweist. Der in den Fig. 2 und 3 mit einer Kreuzschraffur dargestellte elektrisch leitende Abschnitt 15 des Kunststoffspritzteils bildet eine Kontaktfläche für die Treiberbatterie 7, ein damit elektrisch verbundenes Kontaktelement für die Gasentwicklungszelle 10 und erstreckt sich bis zur Oberseite des Trägers 8, wo eine elektrisch leitende Kontaktfeder 16 angeschlossen ist. Der Träger 8 weist an seiner Außenseite eine Klemmeinrichtung 17 zur Fixierung der Treiberbatterie 7 auf. In den Träger 8 der Gaserzeugereinheit 5 ist eine weitere elektrisch leitende Kontaktfeder 18 eingesetzt, die an der Treiberbatterie 7 anliegt und an der Oberseite des Trägers einen elektrischen Anschluss zur Kontaktierung mit einem Kontaktelement der elektronischen Steuerungseinheit 6 bildet.

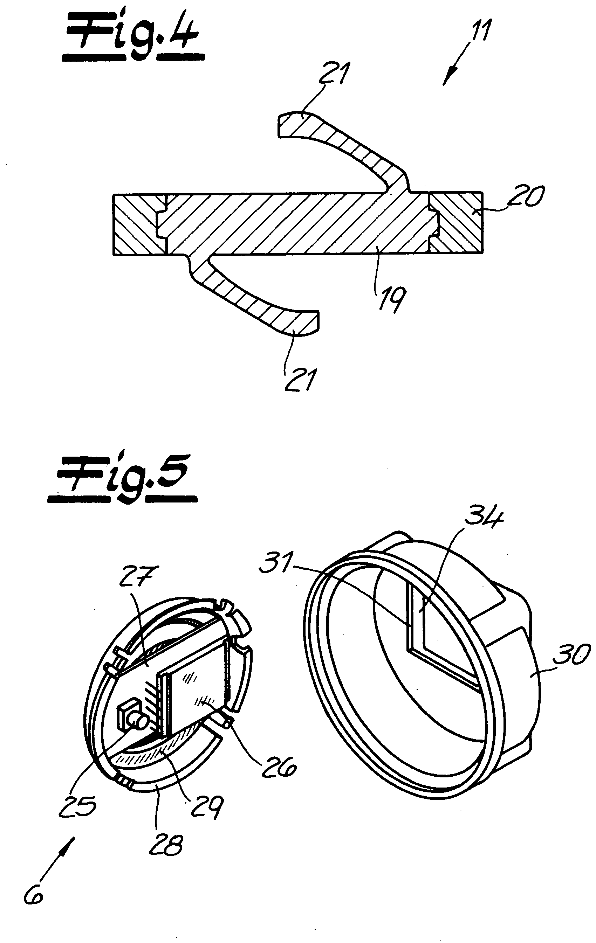

Der Deckel 11 des Aufnahmefaches 9 für die Gasentwicklungszelle 10 ist ebenfalls als Kunststoffspritzteil ausgebildet, welches einen elektrisch leitfähigen Kern 19 und einen den Kern 19 umschließenden Mantel 20 aus einem nicht leitfähigen Kunststoff aufweist. Der Mantel 20 ist mit dem Träger 8 der Gaserzeugereinheit 5 verschweißt, so dass das Aufnahmefach 9 an der Oberseite des Trägers 8 gasdicht verschlossen ist. Dieser das Aufnahmefach 9 verschließende Deckel 11 ist in Fig. 4 in einem vergrößerten Maßstab dargestellt. Der Darstellung in Fig. 4 entnimmt man, dass an dem Kern 19 des Deckels 11 elektrisch leitende Kontaktfedern 21 aus einem leitfähigen Kunststoff angeformt sind. Aus Festigkeitsgründen sind die Kontaktfedern 21 zweckmäßig spiralförmig gewendelt.

An der in Fig. 3 dargestellten Oberseite des Trägers 8 erkennt man insgesamt drei elektrisch leitende Kontaktfedern 16, 18, 21, die elektrische Anschlüsse 22, 23, 24 der Gaserzeugereinheit bilden. Die elektrischen Anschlüsse 22, 24 sind einem Stromkreis für die elektrochemische Gaserzeugung zugeordnet. Die elektrischen Anschlüsse 22, 23 dienen der Stromversorgung der elektronischen Steuerungseinheit 6, wobei der elektrische Anschluss 22 einen gemeinsamen Massekontakt für die beschriebenen Stromkreise bildet.

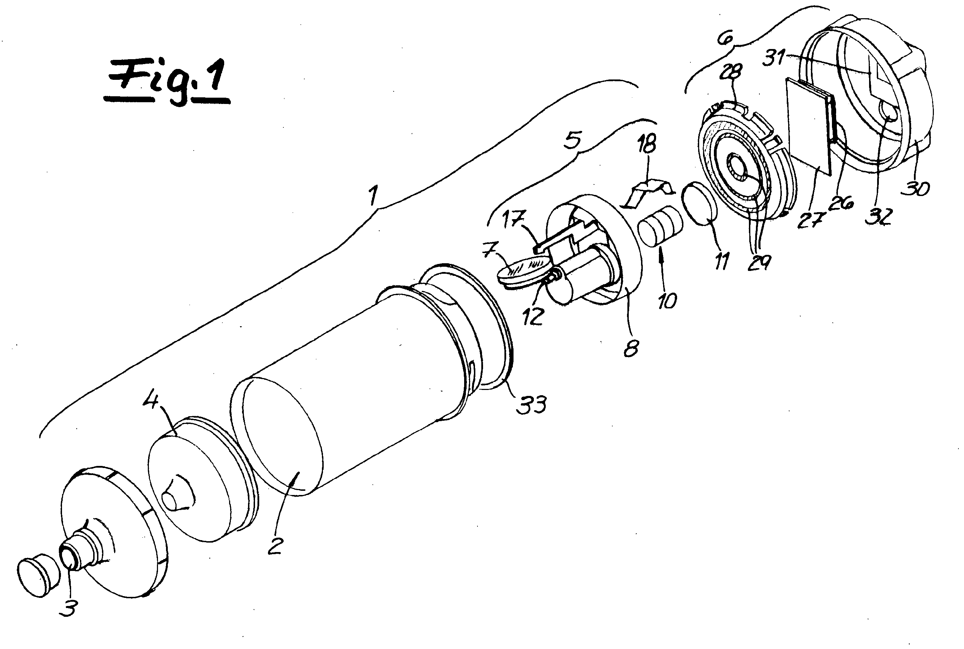

Die elektronische Steuerungseinheit 6 weist eine mit elektronischen Komponenten, einem Taster 25 für die Einstellung einer Spendezeit und einer LCD-Anzeige 26 bestückte Platine 27 auf, die in einem Platinendeckel 28 eingeclipst ist. Der Platinendeckel 28 weist unterseitig konzentrisch angeordnete kreisförmige Leiterbahnen 29 auf, denen jeweils einer der elektrischen Anschlüsse 22, 23, 24 der Gaserzeugereinheit 5 zugeordnet ist. Der Platinendeckel 28 mit der darauf befestigten Platine 27 und den beschriebenen elektronischen Teilen ist in einem Gehäusedeckel 30 angeordnet, der ein Fenster 31 für die LCD-Anzeige 26 und eine Öffnung 32 zur Betätigung des Tasters 25 aufweist und durch eine Schraub- oder Bajonettverbindung an der Schmierstoffkartusche 1 befestigbar ist. Den Fig. 1 und 2 entnimmt man, dass zwischen dem Gehäusedeckel 30 und der Schmierstoffkartusche 1 eine Dichtung 33 angeordnet ist und dass das Fenster 31 und die Öffnung 32 für den Taster 25 durch eine Folie 34 abgedichtet sind, um die elektronischen Komponenten vor Feuchtigkeit und/oder Spritzwasser zu schützen.

Die elektronische Steuerungseinheit 6 ist mit einem Mikrochip bestückt, der den Stromfluss des der Gasentwicklungszelle 10 zugeordneten Stromkreises steuert. In vorgegebenen Intervallen wird der Stromfluss des der Gasentwicklungszelle 10 zugeordneten Stromkreises ein- und ausgeschaltet, wobei durch eine Pulsweitensteuerung, d. h. durch eine Veränderung der Schaltintervalle, die Gaserzeugung verändert werden kann. Zusätzlich oder alternativ kann auch die Stromstärke mittels eines veränderbaren Widerstandes gesteuert werden. Mittels des Tasters 25 kann ein Abgabemodus gewählt werden. Der Mikrochip berechnet die Abgabezeit gemäß dem gewählten Modus, stellt die Steuersignale, die der berechneten Abgabezeit entsprechen, bereit. In der LCD-Anzeige 26 wird der gewählte Modus oder die errechnete Abgabezeit angezeigt.

Insbesondere der Fig. 2 ist zu entnehmen, dass die Gaserzeugereinheit 5 eine separate Baugruppe bildet, die in einen endseitig offenen Aufnahmeraum 37 der Schmierstoffkartusche 1 eingesetzt ist. Die Gaserzeugereinheit 5 ist lediglich durch einen Gasauslasskanal 35 mit einem Behälterboden 36 innerhalb der Schmierstoffkartusche 1 verbunden, der den Aufnahmeraum 37 von dem Gasraum 13 an der Rückseite des Kolbens 4 trennt. Der Gasauslasskanal 35 ist als Vorsprung ausgebildet, der einen kleinen Durchmesser aufweist und vorzugsweise dünnwandig ausgebildet ist. Er greift in eine Öffnung des Behälterbodens 36 ein und ist vorzugsweise durch Reibschweißen mit dem Behälterboden 36 verbunden. Der Gasauslasskanal 35 und die Verbindung zwischen dem Gasauslasskanal 35 und der zugeordneten Öffnung im Behälterboden 36 ist so gestaltet, dass die Gaserzeugereinheit 5 aus der Schmierstoffkartusche 1 leicht herausgebrochen werden kann, so dass nach einer Entleerung der Schmierstoffkartusche 1 die Gaserzeugereinheit separat entsorgt werden kann.

## Patentansprüche

1. Schmierstoffspender mit
- einer Schmierstoffkartusche (1), die einen Schmierstoffvorratsraum (2) mit einem Schmierstoffauslass (3), einen Kolben (4) sowie eine Gaserzeugereinheit (5) zur elektrochemischen Erzeugung eines Gases aufweist,
- einer elektronischen Steuerungseinheit (6) zur Steuerung der elektrochemischen Gaserzeugung und
- einer Treiberbatterie (7) für die Stromversorgung zumindest der elektronischen Steuerungseinheit (6),
wobei die elektronische Steuerungseinheit (6) als separate und wiederverwendbare Einheit lösbar mit der Schmierstoffkartusche (1) verbunden ist und elektrische Kontaktelemente aufweist, die mit elektrischen Anschlüssen der Gaserzeugereinheit (5) in Verbindung stehen und wobei die elektronische Steuerungseinheit (6) keine eigene Stromquelle aufweist, **dadurch gekennzeichnet, dass** die Treiberbatterie (7) unzugänglich an einem Träger (8) der Gaserzeugereinheit (5) gehalten ist, dass erst durch Anbringen der elektronischen Steuerungseinheit (6) an der Schmierstoffkartusche (1) ein der Gaserzeugereinheit (5) zugeordneter Stromkreis geschlossen und die elektronische Steuerungseinheit (6) funktionsbereit ist, dass der Träger (8) der Gaserzeugereinheit (5) ein Aufnahmefach (9) für eine Gasentwicklungszelle (10) aufweist, wobei das Aufnahmefach (9) durch einen Deckel (11) gasdicht verschlossen ist und durch eine Gasauslassöffnung (12) mit einem kolbenrückseitigen Gasraum (13) innerhalb der Schmierstoffkartusche (1) verbunden ist, dass die Gaserzeugereinheit (5) eine separate Baugruppe bildet, die in einen endseitig offenen Aufnahmeraum (37) der Schmierstoffkartusche (1) eingesetzt ist, und dass die Gaserzeugereinheit (5) lediglich durch einen Gasauslasskanal (35) mit einem Behälterboden (36) innerhalb der Schmierstoffkartusche (1) verbunden ist, der den Aufnahmeraum (37) von einem Gasraum (13) an der Rückseite des Kolbens (4) trennt.

2. Schmierstoffspender nach Anspruch 1, **dadurch gekennzeichnet, dass** die Gasentwicklungszelle (10) aus mindestens einer knopfförmigen Zink-Luft-Zelle besteht, die durch Schließen eines Stromkreises Wasserstoff abgibt.

3. Schmierstoffspender nach Anspruch 1 oder 2, **dadurch gekennzeichnet, dass** der Deckel (11) des Aufnahmefaches (9) und eine dem Deckel (11) gegenüberliegende Stirnfläche des Aufnahmefaches (9) elektrische Kontaktelemente bilden.

4. Schmierstoffspender nach einem der Ansprüche 1 bis 3, **dadurch gekennzeichnet, dass** der Träger (8) der Gaserzeugereinheit (5) als Kunststoffspritzteil ausgebildet ist, welches einen Grundkörper (14) aus einem elektrisch nicht leitenden Kunststoff und einen elektrisch leitenden Abschnitt (15) aus einem leitfähigen Material aufweist, wobei der elektrisch leitende Abschnitt (15) eine Kontaktfläche für die Treiberbatterie (7) sowie ein damit elektrisch verbundenes Kontaktelement für die Gasentwicklungszelle (10) bildet.

5. Schmierstoffspender nach einem der Ansprüche 1 bis 4, **dadurch gekennzeichnet, dass** der Träger (8) der Gaserzeugereinheit (5) an seiner Außenseite eine Klemmeinrichtung (17) zur Fixierung der Treiberbatterie (7) aufweist.

6. Schmierstoffspender nach einem der Ansprüche 1 bis 5, **dadurch gekennzeichnet, dass** in den Träger (8) der Gaserzeugereinheit (5) elektrisch leitende Kontaktfedern (16, 18) eingesetzt sind, die an der Treiberbatterie (7) anliegen oder mittelbar mit dieser elektrisch verbunden sind und mit elektrischen Kontaktelementen der elektronischen Steuerungseinheit (6) zusammenwirken.

7. Schmierstoffspender nach einem der Ansprüche 3 bis 6, **dadurch gekennzeichnet, dass** der Deckel (11) des Aufnahmefaches (9) als Kunststoffspritzteil ausgebildet ist, welches einen elektrisch leitfähigen Kern (19) und einen den Kern (19) umschließenden Mantel (20) aus einem nicht leitfähigen Kunststoff aufweist, wobei der Mantel (20) mit dem Träger (8) verschweißt ist und wobei an dem Kern (19) des Deckels (11) elektrisch leitende Kontaktfedern (21) aus einem elektrisch leitfähigen Kunststoff angeformt sind.

8. Schmierstoffspender nach Anspruch 1 bis 7, **dadurch gekennzeichnet, dass** der Gasauslasskanal (35) der Gaserzeugereinheit (5) durch eine trennbare Verbindung mit einer zugeordneten Öffnung im Behälterboden (36) verbunden ist.

9. Schmierstoffspender nach einem der Ansprüche 1 bis 8, **dadurch gekennzeichnet, dass** die Schmierstoffkartusche (1) eine Druckablasseinrichtung in Form eines Ventils oder einer Sollbruchstelle aufweist.

10. Schmierstoffspender nach einem der Ansprüche 1 bis 9, **dadurch gekennzeichnet, dass** die elektronische Steuerungseinheit (6) eine mit elektronischen Komponenten, einem Taster (25) für die Einstellung einer Spendezeit und einer LCD-Anzeige (26) bestückte Platine (27) aufweist, an deren Rückseite konzentrisch angeordnete kreisförmige Leiterbahnen (29) vorgesehen sind, denen jeweils ein elektrischer Anschluss (22, 23, 24) der Gaserzeugereinheit (5) zugeordnet ist.

11. Schmierstoffspender nach Anspruch 10, **dadurch gekennzeichnet, dass** die Platine (27) in einem Gehäusedeckel (30) angeordnet ist, der ein Fenster (31) für die LCD-Anzeige (26) und eine Öffnung (32) zur Betätigung des Tasters (25) aufweist und durch eine Schraub- oder Bajonettverbindung an der Schmierstoffkartusche (1) befestigbar ist.

12. Schmierstoffspender nach Anspruch 11, **dadurch gekennzeichnet, dass** zwischen dem Gehäusedeckel (30) und der Schmierstoffkartusche (1) eine Dichtung (33) angeordnet ist und dass das Fenster (31) und die Öffnung (32) für den Taster (25) durch eine Folie (34) abgedichtet sind.

## Claims

1. A lubricant dispenser comprising
- a lubricant cartridge (1) having a lubricant storage space (2) with a lubricant outlet (3), a piston (4) and also a gas generator unit (5) for the electrochemical generation of a gas,
- an electronic control unit (6) for controlling the electrochemical gas generation and
- a driver battery (7) for supplying power at least to the electronic control unit (6),
wherein the electronic control unit (6) is detachably connected to the lubricant cartridge (1) as a separate, reusable unit and has electrical contact elements which are connected to electrical terminals of the gas generator unit (5) and wherein the electronic control unit (6) does not have its own power source, **characterized in that** the driver battery (7) is inaccessibly held on a support (8) of the gas generator unit (5), that only by mounting the electronic control unit (6) on the lubricant cartridge (1) is an electric circuit assigned to the gas generator unit (5) closed and the electronic control unit (6) is operational, that the support (8) of the gas generator unit (5) has a storage compartment (9) for a gas development cell (10), wherein the storage compartment (9) is closed in a gas-tight manner by a cover (11) and is connected by a gas outlet port (12) to a gas chamber (13) on the rear side of the piston within the lubricant cartridge (1), that the gas generator unit (5) creates a separate assembly which is inserted into a storage space (37) of the lubricant cartridge (1) which is open at the end and that the gas generator unit (5) is only connected to a container bottom (36) within the lubricant cartridge (1) by a gas outlet duct (35), which separates the storage space (37) from a gas compartment (13) on the rear of the piston (4).

2. The lubricant dispenser according to claim 1, **characterized in that** the gas generation cell (10) comprises at least one knob-shaped zinc-air cell which delivers hydrogen by closing an electric circuit.

3. The lubricant dispenser according to claim 1 or 2, **characterized in that** the cover (11) of the storage compartment (9) and an end face of the storage compartment (9) opposite the cover (11) create electrical contact elements.

4. The lubricant dispenser according to one of claims 1 to 3, **characterized in that** the support (8) of the gas generator unit (5) is configured as a plastics injection part which has a base body (14) made of an electrically non-conductive plastic and an electrically conductive portion (15) made of a conductive material, wherein the electrically conductive portion (15) forms a contact surface for the driver battery (7) and also a contact element for the gas generation cell (10) connected thereto.

5. The lubricant dispenser according to one of claims 1 to 4, **characterized in that** the support (8) of the gas generator unit (5) has a clamping mechanism (17) on its outside for fixing the driver battery (7).

6. The lubricant dispenser according to one of claims 1 to 5, **characterized in that** electrically conductive contact springs (16, 18) are inserted into the support (8) of the gas generator unit (5), which contact springs bear against the driver battery (7) or are indirectly electrically connected thereto and interact with electrical contact elements of the electronic control unit (6).

7. The lubricant dispenser according to one of claims 3 to 6, **characterized in that** the cover (11) of the storage compartment (9) is configured as a plastics injection part which has an electrically conductive core (19) and a casing (20) enclosing the core (19) made of a non-conductive plastic, wherein the casing (20) is welded to the support (8) and wherein electrically conductive contact springs (21) made of an electrically conductive plastic are formed on the core (19) of the cover (11).

8. The lubricant dispenser according to claim 1 to 7, **characterized in that** the gas outlet duct (35) of the gas generator unit (5) is connected by a separable connection to an assigned opening in the container bottom (36).

9. The lubricant dispenser according to one of claims 1 to 8, **characterized in that** the lubricant cartridge (1) has a pressure release mechanism in the form of a valve or a predetermined breaking point.

10. The lubricant dispenser according to one of claims 1 to 9, **characterized in that** the electronic control unit (6) has a printed circuit board (27) with electronic components, a push-button (25) for setting a dispensing time and an LCD (26), concentrically arranged circular strip conductors (29) being provided on the rear side of said printed circuit board, to which an electrical terminal (22, 23, 24) of the gas generator unit (5) is assigned in each case.

11. The lubricant dispenser according to claim 10, **characterized in that** the printed circuit board (27) is arranged in a housing cover (30) which has a window (31) for the LCD (26) and an opening (32) for actuating the push-button (25) and can be secured by a screw or bayonet connection to the lubricant cartridge (1).

12. The lubricant dispenser according to claim 11, **characterized in that** a seal (33) is arranged between the housing cover (30) and the lubricant cartridge (1) and that the window (31) and the opening (32) for the push-button (25) are sealed by a film (34).

## Revendications

1. Distributeur de lubrifiant, comprenant
- une cartouche de lubrifiant (1), qui comporte un espace de réserve de lubrifiant (2) avec une sortie de lubrifiant (3), un piston (4) ainsi qu'un ensemble générateur de gaz (5) pour la génération électrochimique d'un gaz,
- une unité de commande électronique (6) pour commander la génération électronique de gaz et
- une batterie pilote (7) pour l'alimentation électrique d'au moins l'unité de commande électronique (6),
en tant qu'unité séparée et réutilisable, l'unité de commande électronique (6) étant assemblée de manière amovible avec la cartouche de lubrifiant (1) et comportant des éléments de contact électrique, qui sont en liaison avec des connexions électriques de l'ensemble générateur de gaz (5) et l'unité de commande électronique (6) ne comportant aucune propre source électrique, **caractérisé en ce que** la batterie pilote (7) est maintenue de manière inaccessible sur un support (8) de l'ensemble générateur de gaz (5), **en ce que** ce n'est que lors du montage de l'unité de commande électronique (6) sur la cartouche de lubrifiant (1) qu'un circuit électrique associé à l'ensemble générateur de gaz (5) est fermé et l'unité de commande électronique (6) est fonctionnelle, **en ce que** le support (8) de l'ensemble générateur de gaz (5) comporte un compartiment réceptacle (9) pour une cellule de gazage (10), le compartiment réceptacle (9) étant fermé de manière étanche au gaz par un couvercle (11) et étant relié par un orifice de sortie de gaz (12) avec un espace gazeux (13) se trouvant à l'arrière du piston à l'intérieur de la cartouche de lubrifiant (1), **en ce que** l'ensemble générateur de gaz (5) forme une unité séparée, qui est insérée dans un espace de logement (37) à extrémité ouverte de la cartouche de lubrifiant (1), et **en ce que** l'ensemble générateur de gaz (5) est uniquement relié par un conduit de sortie de gaz (35) avec un fond de réservoir (36) à l'intérieur de la cartouche de lubrifiant (1) qui sépare l'espace de logement (37) d'un espace gazeux (13) sur la face arrière du piston (4) .

2. Distributeur de lubrifiant selon la revendication 1, **caractérisé en ce que** la cellule de gazage (10) est constituée d'au moins une cellule zinc-air en forme de bouton, qui par fermeture d'un circuit électrique, délivre de l'hydrogène.

3. Distributeur de lubrifiant selon la revendication 1 ou 2, **caractérisé en ce que** le couvercle (11) du compartiment réceptacle (9) et une face frontale opposée au couvercle (11) du compartiment réceptacle (9) forment des éléments de contact électrique.

4. Distributeur de lubrifiant selon l'une quelconque des revendications 1 à 3, **caractérisé en ce que** le support (8) de l'ensemble générateur de gaz (5) est conçu sous la forme d'une pièce en matière plastique moulée par injection, laquelle comporte un corps de base (14) en une matière plastique non conductrice d'électricité et une section (15) conductrice d'électricité en une matière conductrice, la section (15) conductrice d'électricité formant une surface de contact pour la batterie pilote (7), ainsi qu'un élément de contact relié avec cette dernière pour la cellule de gazage (10) .

5. Distributeur de lubrifiant selon l'une quelconque des revendications 1 à 4, **caractérisé en ce que** le support (8) de l'ensemble générateur de gaz (5) comporte sur sa face extérieure un système de serrage (17) pour la fixation de la batterie pilote (7).

6. Distributeur de lubrifiant selon l'une quelconque des revendications 1 à 5, **caractérisé en ce que** dans le support (8) de l'ensemble générateur de gaz (5) sont insérés des ressorts de contact électrique (16, 18) qui sont adjacents à la batterie pilote (7) et qui sont indirectement reliés électriquement avec celle-ci et qui coopèrent avec des éléments de contact électrique de l'unité de commande électronique (6).

7. Distributeur de lubrifiant selon l'une quelconque des revendications 3 à 6, **caractérisé en ce que** le couvercle (11) du compartiment réceptacle (9) est conçu sous la forme d'une pièce en matière plastique moulée par injection, laquelle comporte une âme (19) conductrice d'électricité et une enveloppe (20) entourant l'âme (19) en une matière plastique non conductrice, l'enveloppe (20) étant soudée avec le support (8) et sur l'âme (19) du couvercle (11), étant moulés des ressorts de contact électrique (21) en une matière plastique conductrice d'électricité.

8. Distributeur de lubrifiant selon la revendication 1 à 7, **caractérisé en ce que** le conduit de sortie de gaz (35) de l'ensemble générateur de gaz (5) est relié par une liaison amovible avec un orifice associé dans le fond de réservoir (36).

9. Distributeur de lubrifiant selon l'une quelconque des revendications 1 à 8, **caractérisé en ce que** la cartouche de lubrifiant (1) comporte un système de décharge de pression sous la forme d'une soupape ou d'une zone de rupture théorique.

10. Distributeur de lubrifiant selon l'une quelconque des revendications 1 à 9, **caractérisé en ce que** l'unité de commande électronique (6) comporte une carte (27) équipée de composants électroniques, d'un palpeur (25) de réglage d'un temps de distribution et d'un affichage LCD (26), sur la face arrière de laquelle sont prévues des pistes conductives (29) circulaires placées sous forme concentrique à chacune desquelles est associée une connexion électrique (22, 23, 24) de l'ensemble générateur de gaz (5).

11. Distributeur de lubrifiant selon la revendication 10, **caractérisé en ce que** la carte (27) est placée dans un couvercle de boîtier (30) qui comporte une fenêtre (31) pour l'affichage LCD (26) et un orifice (32) pour l'actionnement du palpeur (25) et qui peut se fixer par vissage ou par assemblage à baïonnette sur la cartouche de lubrifiant (1).

12. Distributeur de lubrifiant selon la revendication 11, **caractérisé en ce qu'**entre le couvercle de boîtier (30) et la cartouche de lubrifiant (1) est placé un joint (33) et **en ce que** la fenêtre (31) et l'orifice (32) pour le palpeur (25) sont étanchéifiés par un film (34).
